(19) Europäisches Patentamt
European Patent Office
Office européen des brevets

(11) **EP 1 456 150 B1**

(12) **FASCICULE DE BREVET EUROPEEN**

(45) Date de publication et mention de la délivrance du brevet:
**07.01.2015 Bulletin 2015/02**

(21) Numéro de dépôt: **02803438.7**

(22) Date de dépôt: **19.11.2002**

(51) Int Cl.:
*C04B 35/48* (2006.01)   *C04B 35/66* (2006.01)
*C04B 35/106* (2006.01)   *C04B 35/119* (2006.01)
*C04B 35/185* (2006.01)   *C04B 35/482* (2006.01)
*C04B 35/488* (2006.01)   *C04B 35/634* (2006.01)
*C03B 5/43* (2006.01)   *C04B 35/101* (2006.01)

(86) Numéro de dépôt international:
**PCT/FR2002/003950**

(87) Numéro de publication internationale:
**WO 2003/043953 (30.05.2003 Gazette 2003/22)**

(54) **COMPOSITION REFRACTAIRE NON FACONNEE, DESTINEE NOTAMMENT A LA REALISATION DE SOLES D' UN FOUR DE VERRERIE**

FEUERFESTE NICHT GEFORMTE ZUSAMMENSETZUNG FÜR DIE HERSTELLUNG DES BODENS EINES GLASOFENS

UNWROUGHT REFRACTORY COMPOSITION, IN PARTICULAR FOR PRODUCING GLASS FURNACE HEARTHS

(84) Etats contractants désignés:
**AT BE BG CH CY CZ DE DK EE ES FI FR GB GR IE IT LI LU MC NL PT SE SK TR**

(30) Priorité: **20.11.2001 FR 0115017**

(43) Date de publication de la demande:
**15.09.2004 Bulletin 2004/38**

(73) Titulaire: **Saint-Gobain Centre de Recherches et d'Etudes Européen
92400 Courbevoie (FR)**

(72) Inventeurs:
• **GUIGONIS, Jacques, Marius, Louis
F-84210 Pernes (FR)**
• **CONSALES, Thierry, Claude
F-84210 Althen des Paluds (FR)**

(74) Mandataire: **Sartorius, Jérome et al
Cabinet Nony
3, rue de Penthièvre
75008 Paris (FR)**

(56) Documents cités:
**GB-A- 2 112 374     US-A- 4 308 067
US-A- 5 753 572**

• **PATENT ABSTRACTS OF JAPAN vol. 1999, no. 11, 30 septembre 1999 (1999-09-30) & JP 11 159970 A (HARIMA CERAMIC CO LTD), 15 juin 1999 (1999-06-15)**

EP 1 456 150 B1

**EP 1 456 150 B1**

**Description**

La présente invention est relative à une composition réfractaire non façonnée, destinée notamment à la réalisation de soles d'un four de verrerie. Par composition réfractaire, on entend une composition permettant de produire un matériau réfractaire.

L'industrie du verre utilise généralement pour la construction de ses fours des produits réfractaires fondus et coulés, ou obtenus par frittage, très résistants à la corrosion par le verre, et se présentant sous la forme de « blocs » ou de « dalles ».

Pour éviter l'infiltration de verre fondu entre les blocs ou dalles, il est parfois nécessaire d'utiliser des matériaux réfractaires non façonnés pour jointoyer ces blocs ou ces dalles. Le problème se pose tout particulièrement au niveau des soles des fours à verre où l'infiltration de ce dernier entre les dalles provoque la corrosion des matériaux utilisés pour former la couche sous-jacente aux dalles, appelée « chape », puis la corrosion des dalles elles-mêmes.

Le brevet FR-B-2458520 décrit une composition dite « réfractaire » destinée à la production de tels matériaux réfractaires non façonnés. Cette composition réfractaire, à base de particules d'un matériau réfractaire fondu et coulé contenant une matrice vitreuse, est largement utilisée mais présente l'inconvénient de ne pas être pompable, après son humidification, avec des pompes produisant des pressions d'aspiration inférieures ou égales à 180 bar.

On connaît des compositions réfractaires pompables utilisées pour le jointoiement des blocs de fours d'élaboration des métaux. Les contraintes dans cette application sont cependant très différentes de celles rencontrées dans l'application aux fours de verrerie. Les conditions de corrosion des fours par un verre ou par un métal en fusion sont également différentes.

Certaines impuretés, tolérées dans les fours d'élaboration des métaux, sont inacceptables pour la fabrication du verre. En particulier, les matériaux réfractaires utilisés dans les fours de verrerie ne doivent pas générer de défauts tels que le « lâcher de pierres » par morcellement du matériau réfractaire dans le bain de verre fondu, ou la production de bulles. Une composition réfractaire destinée à un four d'élaboration des métaux n'est donc pas, a priori, utilisable pour un four de verrerie.

Il existe donc un besoin pour des compositions réfractaires utilisables dans les fours verriers et plus facilement pompables que les compositions selon la technique antérieure.

La présente invention vise à satisfaire ce besoin. Plus particulièrement, l'invention concerne une composition réfractaire non façonnée, destinée notamment à la réalisation de soles d'un four de verrerie, remarquable en ce qu'elle comprend un mélange de base comportant, en pourcentage en poids,

- 1 à 6% d'un ciment hydraulique, et
- 94 à 99% de particules d'au moins un matériau réfractaire dont les constituants principaux sont l'alumine ($Al_2O_3$), la zircone ($ZrO_2$) et la silice ($SiO_2$),

la fraction des particules dudit mélange de base ayant une grosseur inférieure à 40$\mu$m étant distribuée, en pourcentage en poids par rapport au poids dudit mélange de base, de la manière suivante :

- fraction < 0,5 $\mu$m: $\geq$ 4%
- fraction < 2 $\mu$m: $\geq$ 5%, de préférence $\geq$ 8%
- fraction < 10 $\mu$m: $\geq$ 16%
- fraction < 40 $\mu$m : 29 - 45 %, de préférence 30 - 45 % ladite composition réfractaire comportant en outre, en pourcentage en poids par rapport au poids dudit mélange de base,
- 0,02 à 0,08% de fibres organiques, et
- 0,075 à 1 %, de préférence 0,1 à 1 %, d'un agent tensio-actif.

Par « constituants principaux », on entend les constituants majoritaires, c'est-à-dire ceux dont les proportions massiques sont les plus élevées.

Comme on le verra plus en détail dans la suite de la description, une telle composition est pompable avec des pressions d'aspiration inférieures ou égales à 180 bar et permet de préparer un matériau apte à être utilisé pour la réalisation de soles d'un four de verrerie.

Selon d'autres caractéristiques de la composition selon l'invention,

- ledit mélange de base contient, en pourcentage en poids :

  - $Al_2O_3$ : 45 - 65%,
  - $ZrO_2$ : 20 - 35%,
  - $SiO_2$ : 12 - 20% ;

2

- ladite composition comporte en outre 4 à 5,5% d'eau par rapport au poids total dudit mélange de base ;

- la fraction des particules dudit mélange de base ayant une grosseur inférieure à 500$\mu$m représente plus de 50% en poids dudit mélange de base ;

- la fraction des particules dudit mélange de base ayant une grosseur comprise entre 40 et 500$\mu$m est comprise entre 15 et 30% en poids dudit mélange de base ;

- lesdites particules de matériau réfractaire contiennent 3 à 5% de fumée de silice ;

- la fraction des particules dudit mélange de base ayant une grosseur inférieure à 40$\mu$m est distribuée, en pourcentage en poids par rapport au poids dudit mélange de base, de la manière suivante :

    - fraction <0,5$\mu$m : $\geq$ 5%
    - fraction < 2$\mu$m : $\geq$ 10%
    - fraction < 10$\mu$m : $\geq$22%
    - fraction < 40$\mu$m : 30 - 45 % ;

- la proportion de silice dans la fraction desdites particules dudit mélange de base ayant une grosseur inférieure à 500$\mu$m est inférieure ou égale à 16%, en poids par rapport au poids total de ladite fraction ;

- la proportion de silice dans la fraction desdites particules dudit mélange de base ayant une grosseur inférieure à 500 $\mu$m est inférieure ou égale à 14,5%, en poids par rapport au poids total de ladite fraction ;

- la proportion de silice dans la fraction desdites particules dudit mélange de base ayant une grosseur inférieure à 40 $\mu$m est inférieure ou égale à 14,5%, en poids par rapport au poids total de ladite fraction ;

- ledit mélange de base comporte de 3 à 5% en poids dudit ciment hydraulique ;

- ladite composition comporte, en pourcentage en poids par rapport au poids dudit mélange de base, de 0,01 à 0,15% d'un accélérateur de prise ;

- ledit agent tensio-actif est un composé de la famille des polycarboxylates modifiés.

L'invention concerne également un produit réfractaire obtenu par frittage d'une composition réfractaire selon l'invention.
Selon d'autres caractéristiques du produit réfractaire selon l'invention,

- $((Lmax - L_{1350}) / L) \leq 0,5\%$, où L, Lmax et L$_{1350}$ désignent la longueur d'un échantillon dudit produit à des températures ambiante, de dilatation maximale et de 1350°C respectivement ;

- la température de dilatation maximale (Td$_{max}$) dudit produit réfractaire est supérieure à 1100 °C.

Lesdites particules du matériau réfractaire fondu et coulé, globalement référencées par (a), peuvent être constituées en des matériaux réfractaires présentant des analyses chimiques diverses. Les répartitions granulométriques des particules peuvent également différer selon leur matériau de constitution, pourvu que, globalement, les contraintes granulométriques imposées par l'invention soient respectées.
Pour obtenir les particules (a), on peut utiliser différents matériaux réfractaires, provenant par exemple :

- des produits réfractaires électrofondus tels que l'ER-1681 ou l'ER-1711 produits et commercialisés par la Société Européenne des Produits Réfractaires. Ces deux produits, appelés dans le tableau 1 « particules AZS » (du fait de leurs teneurs en Al$_2$O$_3$, ZrO$_2$ et SiO$_2$), contiennent en pourcentage en poids, sur la base des oxydes : 32 à 54% de ZrO$_2$, 36 à 51 % d'Al$_2$O$_3$, 2 à 16% de SiO$_2$ et 0,2 à 1,5% de Na$_2$O;

- des produits réfractaires en mullite fondue, appelés « mullite » dans la tableau 1, par exemple une poudre qui contient 76,5% d'Al$_2$O$_3$ et 22,5% de SiO$_2$ et dont la grosseur des particules varie de 0,7 à 1,5mm ;

- des produits à forte teneur en zircone, appelés « zircone » dans la tableau 1, tels que la CS10 commercialisée par la Société Européenne des Produits Réfractaires. Ce produit contient plus de 99% de $ZrO_2$ et le diamètre médian (D50) des particules de zircone est de 3,5 $\mu$m ;

- de l'alumine réactive, ou un mélange d'alumines réactives, contenant plus de 99% d'$Al_2O_3$, le diamètre médian des particules d'alumine réactive pouvant varier de 0,5$\mu$m à 3 $\mu$m ;

- de l'alumine électrofondue dont les particules ont une taille comprise entre 0,04 et 0,5 m m ;

- de la silice telle que la fumée de silice commercialisée par la Société Européenne des Produits Réfractaires. Cette silice vitreuse contient plus de 93% de silice ($SiO_2$) et se présente sous la forme d'une poudre dont les particules ont une grosseur comprise entre 0,1 et 5 $\mu$m et un diamètre médian de 0,5 $\mu$m.

Avantageusement, la présence de cette espèce permet de réduire la quantité d'eau nécessaire pour rendre la composition réfractaire coulable. Il semble que les très fines particules de silice se répartissent bien dans la composition et permettent ensuite d'obtenir une bonne liaison dans le produit final après frittage. Pour cette raison, on considère qu'il est nécessaire d'avoir entre 3 et 5% de fumée de silice dans la composition.

Le ciment hydraulique, référencé par (b), constitue 1 à 6% du mélange de base (a)+(b), de préférence 3 à 5% en poids. Le ciment hydraulique (b) peut être un ciment alumineux ou un mélange de différents ciments. Pour limiter la teneur en chaux (CaO), on préfère utiliser un ciment à forte teneur en alumine, tel que le CA25 de la société Alcoa. Le CA25 contient plus de 78% d'$Al_2O_3$ et moins de 19% de CaO. Les particules du CA25 ont un diamètre médian d'environ 8 $\mu$m.

Pour produire le mélange de base (a)+(b) utilisé pour la composition réfractaire selon l'invention, on mélange des particules de (a) et de (b), dans des proportions en poids de 94 à 99% et de 1 à 6% respectivement, de manière à ce que, dans la composition de base résultante, de 30 à 45%, en poids, des particules aient une grosseur inférieure à 40 $\mu$m, au moins 16%, en poids, des particules aient une grosseur inférieure à 10$\mu$m, au moins 8%, en poids, des particules aient une grosseur inférieure à 2$\mu$m, et au moins 4%, en poids, des particules aient une grosseur inférieure à 0,5$\mu$m.

Il est clair que les particules ayant une grosseur inférieure à 10 $\mu$m sont comptabilisées dans les 30 à 45% des particules ayant une grosseur inférieure à 40$\mu$m, que les particules ayant une grosseur inférieure à 2 $\mu$m sont comptabilisées dans les particules ayant une grosseur inférieure à 40 $\mu$m et dans celles ayant une grosseur inférieure à 10$\mu$m, etc.

La composition réfractaire selon l'invention comporte encore des fibres organiques (c) dans une proportion de 0,02 à 0,08% par rapport au poids total de (a) et (b). Ces fibres sont par exemple des fibres de polypropylène, de polyacrylonitrile ou de polyvinyl alcool, dont la longueur moyenne varie entre 18 et 24mm.

La présence de fibres organiques permet d'améliorer la résistance à cru de la composition et d'éviter la formation de fissures lors de son séchage. Par ailleurs, les fibres organiques (c) sont éliminées lors de la phase de montée en température du four, créant ainsi un réseau de petits canaux permettant une évacuation plus efficace de l'eau.

Pour ces raisons, il est nécessaire d'avoir au moins 0,02% de fibres par rapport au poids total de la composition de base. Par contre, au delà de 0,08%, la proportion de fibres devient trop importante pour que la composition puisse être pompable.

La composition réfractaire selon l'invention comporte encore au moins un agent tensio-actif (d) dans une proportion de 0,1 à 1 % par rapport au poids total de (a) et (b). Le rôle de cet agent tensio-actif est de modifier les propriétés rhéologiques de la composition pour en faciliter le pompage.

On utilisera de préférence des agents tensio-actifs de type polycarboxylate modifié.

De préférence, la composition réfractaire selon l'invention comporte encore au moins un accélérateur de prise (e) pour composition utilisant un liant hydraulique, dans une proportion de 0,01 à 0,15% par rapport au poids total de (a) et (b). De tels accélérateurs de prise sont connus en eux-mêmes par l'homme du métier.

La composition réfractaire se présente sous la forme d'une poudre facilement manipulable.

Pour mettre en oeuvre la composition de l'invention, on mélange intimement les différents composants avec une quantité d'eau (f) variant entre 4 et 5,5% en poids par rapport au total (a) + (b).

Avantageusement, ce mélange, qui est lui-même une composition réfractaire selon l'invention, peut-être pompé à l'aide d'une pompe à pistons et amené directement dans le four de verrerie, par exemple pour réaliser la sous-couche de la sole. Il peut alors être mis en oeuvre, par exemple par simple coulage ou au moyen d'une règle vibrante.

On laisse alors reposer le mélange à température ambiante. La montée en température du four provoque ensuite un frittage du mélange.

La composition réfractaire de l'invention peut également servir à fabriquer des pièces de forme de dimensions classiques qui seront assemblées dans les fours de verrerie.

Les exemples non limitatifs qui vont suivre sont donnés en vue d'illustrer l'invention.

Différents mélanges de base (a)+(b) sont mélangés à des fibres organiques (c), un agent tensio-actif (d) et de l'eau (f), de manière à obtenir des compositions réfractaires 1 à 16.

Le tableau 1 fournit la composition des 16 mélanges de base (a)+(b) correspondants. Il indique également la distribution granulométrique des «particules AZS » utilisés dans ces mélanges de base. Enfin, il fournit les teneurs en $Al_2O_3$, $ZrO_2$ et $SiO_2$ des matériaux obtenus à partir des compositions réfractaires 1 à 16. Ces teneurs sont sensiblement égales aux teneurs en $Al_2O_3$, $ZrO_2$ et $SiO_2$ dans les mélanges de base (a)+(b) correspondants.

Le tableau 2 fournit les compositions des compositions réfractaires 1 à 16.

On essaie de pomper ces compositions réfractaires au moyen d'une pompe PUTZMEISTER BSA 1002. « P » désigne la pression d'aspiration nécessaire pour le pompage.

Les compositions réfractaires 1 à 16 sont ensuite utilisées pour fabriquer des dalles réfractaires.

On prélève un échantillon sur chacune des dalles réfractaires pour évaluer le comportement dilatométrique. Compte tenu des teneurs en $Al_2O_3$, $ZrO_2$ et $SiO_2$, les matériaux de ces dalles réfractaires appartiennent à la famille AZS. En conséquence, lorsque les échantillons sont portés à 1350°C, ils se dilatent jusqu'à une température de dilatation maximale Tdmax, puis se rétractent. On mesure la température Tdmax ainsi que la dilatation ΔL%.

ΔL% est égale au rapport de la différence des longueurs de l'échantillon $L_{max}$ et $L_{1350}$, à $Td_{max}$ et à 1350°C respectivement, sur la longueur initiale L de l'échantillon (à température ambiante d'environ 20°C), soit : ΔL% = ($L_{max}$ - $L_{1350}$) / L.

La dilatation d'un matériau réfractaire génère des contraintes thermo-mécaniques qui peuvent être à l'origine de fissures. Il est donc préférable que la température de dilatation maximale Tdmax soit proche de la température de service, généralement comprise entre 1250 et 1300°C.

Le tableau 3 fournit les résultats des essais effectuées sur les échantillons obtenus à partir des compositions réfractaires 1 à 16, les teneurs en silice ($SiO_2$) des fractions 0-500 μm et 0-40 μm des mélanges de base (a)+(b) utilisés pour fabriquer ces échantillons, et la distribution granulométrique de ces mélanges de base (a)+(b).

Dans le tableau 1, les particules AZS sont obtenues par broyage d'un produit réfractaire comprenant en poids : 51 % d'$Al_2O_3$, 33% de $ZrO_2$ et 15% de $SiO_2$.

La composition 1, appartenant à la technique antérieure, sert de composition de référence. Elle correspond à un produit dénommé ERSOL et commercialisé par la Société Européenne des Produits Réfractaires. Ce produit est un réfractaire non façonné utile pour remplir les joints entre les blocs ou dalles et/ou pour former la couche sous-jacente aux dalles, appelée " chape ", dans les fours de verrerie. Dans le tableau 2, l'agent tensio-actif « A » est un polyphosphate de sodium à longue chaîne et les agents tensio-actifs « B » et « C » sont des composés de la famille des polycarboxylates modifiés.

Le choix d'un tensio-actif parmi les tensio-actifs généralement utilisés par l'homme du métier sera guidé par les résultats d'essais simples, tels que ceux décrits dans la présente demande, en fonction des performances recherchées (caractère pompable de la composition réfractaire, propriétés dilatométriques du matériau réfractaire obtenu).

D'après le tableau 3, l'amélioration du caractère pompable d'une composition dépend de la distribution des particules dans les différentes tranches granulométriques inférieures à 40μm. On constate qu'une distribution, en pourcentage en poids par rapport au poids du mélange de base, telle que

- fraction < 0,5 μm : ≥ 4%
- fraction < 2 μm : ≥ 8%
- fraction < 10 μm : ≥ 16%
- fraction < 40 μm : 30-45%,

rend avantageusement la composition réfractaire pompable avec une pression d'aspiration inférieure à 120 bar.

On peut penser qu'une telle représentation des différentes fractions permet un arrangement homogène des différentes particules et un entassement plus compact.

Par ailleurs, on peut également supposer que la teneur élevée, comprise selon l'invention entre 30 et 45 %, en particules de grosseur inférieure à 40 μm, appelées particules « ultra-fines », permet aux particules plus grosses de glisser et de rouler les unes sur les autres, ce qui améliorerait la coulabilité et inhiberait le phénomène d'essorage, c'est-à-dire la séparation entre les plus grosses particules et les particules les plus fines.

On constate par ailleurs, sur le tableau 1, que dans les mélanges de base (a)+(b) des compositions réfractaires pompables, la proportion de particules fines, c'est-à-dire dont la grosseur est comprise entre 40 et 500μm, est comprise entre 15 et 30% en poids par rapport au poids total (a)+(b). Dans ces mélanges de base, la fraction < 500μm est supérieure à 50% en poids par rapport au poids total (a)+(b).

De préférence, la distribution granulométrique des ultra-fines dans le mélange de base (a) + (b), en pourcentage en poids par rapport au poids du mélange de base, est telle que

- fraction < 0,5μm : ≥ 5%

- fraction < 2$\mu$m : $\geq$ 10%
- fraction < 10$\mu$m : $\geq$ 22%
- fraction < 40$\mu$m : $\geq$ 30%.

Sur le tableau 3, on constate également que les matériaux réfractaires produits à partir des compositions 8, 10 et 16 présentent avantageusement un comportement dilatométrique amélioré (Td$_{max}$ augmente et/ou $\Delta$L% diminue significativement) par rapport au matériau réfractaire produit à partir de la composition 1 de référence.

Par ailleurs, les matériaux réfractaires produits à partir des compositions 5, 7, 9, 12 et 13 ont avantageusement un très bon comportement dilatométrique. Pour ces matériaux, $\Delta$L% est inférieur ou égal à 0,5 % et Td$_{max}$ est supérieur ou égal à 1100°C.

Ces comportements dilatométriques semblent être liés à la proportion de silice dans la fraction des fines et ultra-fines particules (passant à 500$\mu$m et 40$\mu$m, respectivement). On constate que, de préférence, dans la proportion de fines particules (passant à 500$\mu$m), la teneur en silice doit être inférieure ou égale à 16%, de préférence, inférieure ou égale à 14,5%en poids.

De préférence, la teneur en silice dans la fraction des ultra-fines particules (passant à 40 $\mu$m) doit être inférieure ou égale à 14,5% en poids.

Le tableau 3 indique enfin que les matériaux réfractaires produits à partir des compositions selon l'invention contiennent, en pourcentage en poids :

- Al$_2$O$_3$ : 45 - 65%
- ZrO$_2$ : 20 - 35%
- SiO$_2$ : 12 - 20%.

Des tests de corrosion ont également permis de vérifier que le comportement des produits réfractaires selon l'invention n'est pas dégradé par rapport à celui du produit réfractaire de référence résultant de l'essai 1. En particulier, les indices de corrosion, dans un verre sodocalcique à 1350°C, des produits réfractaires résultant des essais 1 et 13 sont sensiblement égaux.

Enfin, le produit réfractaire résultant de l'essai 13 n'a pas montré de tendance à générer davantage de défauts (bulles ou pierres) que le produit réfractaire de référence résultant de l'essai 1.

Tableau 1 : Compositions des mélanges de base utilisés pour produire les compositions réfractaires N°1 à 16

| | Mélange de base (a)+(b) en % en poids | | | | | | | | | | Teneurs en % en poids | | |
| | Particules AZS | | | | Mullite | Zircone | Alumines réactives | Alumine électro-fondue | Fumée de silice | Ciment | $Al_2O_3$ | $ZrO_2$ | $SiO_2$ |
| N° | 2-5 mm | 0,5-2 mm | 40-500 $\mu$m | 0-40 $\mu$m | | | | | | | | | |
|---|---|---|---|---|---|---|---|---|---|---|---|---|---|
| 1 | 26 | 30 | 19 | 16 | | | | | 5 | 4 | 49,6 | 30 | 18,7 |
| 2 | 26 | 30 | 19 | 16 | | | | | 5 | 4 | 49,6 | 30 | 18,7 |
| 3 | 20 | 25 | 24 | 22 | | | | | 5 | 4 | 49,6 | 30 | 18,7 |
| 4 | 20 | 25 | 24 | 22 | | | | | 5 | 4 | 49,6 | 30 | 18,7 |
| 5 | 20 | 23 | 19 | 8 | 8 | 4 | 11 | | 3 | 4 | 55,9 | 27,1 | 15,4 |
| 6 | 20 | 23 | 19 | 8 | 8 | 4 | 11 | | 3 | 4 | 55,9 | 27,1 | 15,4 |
| 7 | 20 | 23 | 19 | | 12 | 8 | 11 | | 3 | 4 | 54,9 | 28,5 | 15,1 |
| 8 | 20 | 23 | 19 | 11 | 8 | 6 | 6 | | 3 | 4 | 52,6 | 30,1 | 15,8 |
| 9 | 22 | 15 | 15 | 11 | 8 | 4 | 10 | 8 | 3 | 4 | 59,4 | 24,8 | 14,3 |
| 10 | 22 | 19 | 19 | 11 | 8 | 4 | 10 | | 3 | 4 | 55,5 | 27,4 | 15,5 |
| 11 | 20 | 20 | 21 | | 8 | 7 | 17 | | 3 | 4 | 57,4 | 27,1 | 14 |
| 12 | 21 | 18 | 10 | 8 | 8 | 4 | 12 | 12 | 3 | 4 | 62,3 | 22,8 | 13,4 |
| 13 | 21 | 18 | 10 | 8 | 8 | 4 | 11 | 12 | 3 | 5 | 62,1 | 22,8 | 13,4 |
| 14 | 21 | 18 | 10 | 8 | 8 | 4 | 11 | 12 | 3 | 5 | 62,1 | 22,8 | 13,4 |
| 15 | 26 | 30 | 19 | 16 | | | 2 | | 3 | 4 | 51,6 | 30 | 16,7 |
| 16 | 26 | 22 | 10 | 16 | 8 | 1 | | 10 | 3 | 4 | 57,7 | 25,4 | 16,3 |

Tableau 2 : Compositions réfractaires N° 1 à 16.

| | Composition réfractaire N° | | | |
|---|---|---|---|---|
| | | en % en poids par rapport au total (a)+(b) | | |
| N° | (a)+(b) | Fibres organiques (c) | Agent tensio-actif (d) | Eau (f) |
| 1 | Cf Tableau 1 | 0,02 % | 0,075 % de A | 4,5 |
| 2 | | 0,02 % | 0,5 % de C | 5,1 |
| 3 | | 0,02 % | 0,5 % de C | 5,5 |
| 4 | | 0,02 % | 0,5 % de C | 5,2 |
| 5 | | 0,02 % | 0,075 % de A | 5,2 |
| 6 | | 0,02% | 0,5 % de C | 5,0 |
| 7 | | 0,02 % | 0,075 % de A | 5,1 |
| 8 | | 0,02 % | 0,3 % de B | 4,9 |
| 9 | | 0,02 % | 0,5 % de C | 5,0 |
| 10 | | 0,02 % | 0,5 % de C | 5,1 |
| 11 | | 0,02 % | 0,075 % de A | 4,9 |
| 12 | | 0,02 % | 0,3 % de B | 4,7 |
| 13 | | 0,02 % | 0,3 % de B | 5,2 |
| 14 | | 0,02 % | 0,5 % de C | 5,2 |
| 15 | | 0,02 % | 0,3 % de B | 5,3 |
| 16 | | 0,02 % | 0,3 % de B | 5,2 |

Tableau 3 : Résultats des essais effectuées sur les matériaux obtenus à partir des compositions réfractaires N° 1 à 16.

| N° | Particules de (a)+(b) passant à | | | | | $SiO_2$* (%) | | Résultats des tests | | |
|---|---|---|---|---|---|---|---|---|---|---|
| | 0,5$\mu$m | 2$\mu$m | 10$\mu$m | 40$\mu$m | 500$\mu$m | 0-500 $\mu$m | 0-40 $\mu$m | P (bar) | $Td_{max}$ | $\Delta$L % |
| 1 | 3,8 | 7,9 | 14,7 | 25,7 | 47 | 22,8 | 29,6 | > 180 | 931 | 0,64 |
| 2 | 3,8 | 7,9 | 14,7 | 25,7 | 47 | | | > 180 | | |
| 3 | 4 | 8,9 | 17,6 | 31,7 | 57,5 | 21,3 | 26,8 | 110 | 940 | 0,7 |
| 4 | 4 | 8,9 | 17,6 | 31,7 | 57,5 | 21,3 | 26,8 | 110 | 931 | 0,64 |
| 5 | 5,2 | 5,6 | 23,4 | 31,9 | 51,3 | 14,4 | 14,0 | 130 | 1107 | 0,3 |
| 6 | 5,2 | 5,6 | 23,4 | 31,9 | 51,3 | | | 130 | | |
| 7 | 5,1 | 10 | 23,3 | 29,1 | 31,9 | 13,1 | 11,5 | 180 | 1100 | 0,36 |
| 8 | 5,3 | 11,1 | 24,9 | 34,1 | 51,8 | 15,3 | 15,5 | 110 | 1095 | 0,43 |
| 9 | 5 | 10,6 | 23,9 | 33,1 | 50,3 | 12,6 | 14,5 | 80 | 1147 | 0,5 |
| 10 | 5,2 | 12,1 | 23,9 | 33,5 | 54 | 14,7 | 14,5 | 90 | 1053 | 0,64 |
| 11 | 6,9 | 15,5 | 28,2 | 34,5 | 54 | | | > 180 | | |
| 12 | 5,5 | 12 | 24,4 | 32,8 | 52,9 | 10,9 | 13,5 | 90 | 1122 | 0,44 |
| 13 | 5,3 | 12,3 | 23,9 | 32,8 | 52,9 | 10,9 | 13,5 | 80 | 1136 | 0,4 |
| 14 | 5,3 | 12,3 | 23,9 | 32,8 | 52,9 | | | 80 | | |
| 15 | 4,2 | 8,8 | 14,7 | 25,0 | 47,0 | 18,5 | 21,6 | > 180 | 850 | 0,85 |

(suite)

| N° | \multicolumn{5}{c}{Particules de (a)+(b) passant à} | \multicolumn{2}{c}{SiO2* (%)} | \multicolumn{3}{c}{Résultats des tests} |
|---|---|---|---|---|---|---|---|---|---|---|
|  | $0,5\mu m$ | $2\mu m$ | $10\mu m$ | $40\mu m$ | $500\mu m$ | 0-500 $\mu m$ | 0-40 $\mu m$ | P (bar) | $Td_{max}$ | $\Delta L$ % |
| 16 | 4,3 | 9 | 4,9 | 24,0 | 46,2 | 15,6 | 22,5 | > 180 | 1090 | 0,33 |

\* Teneur en silice en % en poids par rapport à la fraction considérée.

**Revendications**

1. Composition réfractaire non façonnée, destinée notamment à la réalisation de soles d'un four de verrerie, **caractérisée en ce qu'**elle comprend un mélange de base comportant, en pourcentage en poids,

    - 1 à 6% d'un ciment hydraulique, et
    - 94 à 99% de particules d'au moins un matériau réfractaire dont les constituants principaux sont l'alumine ($Al_2O_3$), la zircone ($ZrO_2$) et la silice ($SiO_2$),

la fraction des particules dudit mélange de base ayant une grosseur inférieure à $40\mu m$ étant distribuée, en pourcentage en poids par rapport au poids dudit mélange de base, de la manière suivante :

    - fraction < 0,5 $\mu m$ : $\geq 4$%
    - fraction < 2 $\mu m$ : $\geq 5$ %
    - fraction < 10 $\mu m$ : $\geq 16$%
    - fraction < 40 $\mu m$ : 29 -45 %

ladite composition réfractaire comportant en outre, en pourcentage en poids par rapport au poids dudit mélange de base,

    - 0,02 à 0,08% de fibres organiques, et
    - 0,075 à 1 % d'un agent tensio-actif.

2. Composition selon la revendication 1, **caractérisée en ce que** la fraction des particules dudit mélange de base ayant une grosseur inférieure à $40\mu m$ est distribuée, en pourcentage en poids par rapport au poids dudit mélange de base, de la manière suivante :

    - fraction < 0,5 $\mu m$ : $\geq 4$%
    - fraction < 2 $\mu m$ : $\geq 8$%
    - fraction < 10 $\mu m$ : $\geq 16$%
    - fraction < 40 $\mu m$ : 30-45 %

3. Composition selon l'une des revendications 1 ou 2, **caractérisée en ce qu'**elle comporte en pourcentage en poids par rapport au poids dudit mélange de base, de 0,1 à 1 % dudit agent tensio-actif.

4. Composition selon l'une quelconque des revendications précédentes, **caractérisée en ce que** ledit mélange de base contient, en pourcentage en poids :

    - $Al_2O_3$ : 45 - 65%,
    - $ZrO_2$ : 20 - 35%,
    - $SiO_2$ : 12 - 20%.

5. Composition selon l'une quelconque des revendications précédentes, **caractérisée en ce qu'**elle comporte en outre 4 à 5,5% d'eau par rapport au poids total dudit mélange de base.

6. Composition selon l'une quelconque des revendications précédentes, **caractérisée en ce que** la fraction des particules dudit mélange de base ayant une grosseur inférieure à $500\mu m$ représente plus de 50% en poids dudit mélange de base.

**7.** Composition selon l'une quelconque des revendications précédentes, **caractérisée en ce que** la fraction des particules dudit mélange de base ayant une grosseur comprise entre 40 et 500$\mu$m est comprise entre 15 et 30% en poids dudit mélange de base.

**8.** Composition selon l'une quelconque des revendications précédentes, **caractérisée en ce que** lesdites particules de matériau réfractaire contiennent 3 à 5% de fumée de silice.

**9.** Composition selon l'une quelconque des revendications précédentes, **caractérisée en ce que** la fraction des particules dudit mélange de base ayant une grosseur inférieure à 40$\mu$m est distribuée, en pourcentage en poids par rapport au poids dudit mélange de base, de la manière suivante :

- fraction <0,5$\mu$m : $\geq$ 5 %
- fraction < 2$\mu$m : $\geq$ 10%
- fraction < 10$\mu$m: $\geq$ 22%
- fraction < 40$\mu$m : 30 - 45 %.

**10.** Composition selon l'une quelconque des revendications précédentes, **caractérisée en ce que** la proportion de silice dans la fraction desdites particules dudit mélange de base ayant une grosseur inférieure à 500 $\mu$m est inférieure ou égale à 16%, en poids par rapport au poids total de ladite fraction.

**11.** Composition selon la revendication 10, **caractérisée en ce que** la proportion de silice dans la fraction desdites particules dudit mélange de base ayant une grosseur inférieure à 500 $\mu$m est inférieure ou égale à 14,5%, en poids par rapport au poids total de ladite fraction.

**12.** Composition selon l'une quelconque des revendications précédentes, **caractérisée en ce que** la proportion de silice dans la fraction desdites particules dudit mélange de base ayant une grosseur inférieure à 40 $\mu$m est inférieure ou égale à 14,5%, en poids par rapport au poids total de ladite fraction.

**13.** Composition selon l'une quelconque des revendications précédentes, **caractérisée en ce que** ledit mélange de base comporte de 3 à 5% en poids dudit ciment hydraulique.

**14.** Composition selon l'une quelconque des revendications précédentes, **caractérisée en ce qu'**elle comporte, en pourcentage en poids par rapport au poids dudit mélange de base, de 0,01 à 0,15% d'un accélérateur de prise.

**15.** Composition selon l'une quelconque des revendications précédentes, **caractérisée en ce que** ledit agent tensioactif est un composé de la famille des polycarboxylates modifiés.

**16.** Produit réfractaire obtenu par frittage d'une composition réfractaire selon l'une quelconque des revendications 1 à 15.

**17.** Produit réfractaire selon la revendication 16, **caractérisé en ce que**

$$((L_{max} - L_{1350}) / L ) \leq 0,5\%,$$

où L, $L_{max}$ et $L_{1350}$ désignent la longueur d'un échantillon dudit produit à des températures ambiante, de dilatation maximale et de 1350°C respectivement.

**18.** Produit réfractaire selon l'une quelconque des revendications 16 et 17, **caractérisé en ce qu'**il a une température de dilatation maximale ($Td_{max}$) supérieure à 1100 °C.

**Patentansprüche**

**1.** Nicht geformte feuerfeste Zusammensetzung, insbesondere bestimmt für die Herstellung des Bodens eines Glasofens, **dadurch gekennzeichnet, dass** sie eine Basismischung aufweist, die in Gewichtsprozenten umfasst:

- 1 bis 6% eines hydraulischen Zement, und

- 94 bis 99% von Teilchen mindestens eines feuerfesten Materials, dessen hauptsächliche Bestandteile Aluminiumoxyd ($Al_2O_3$), Zirkonoxyd ($ZrO_2$) sowie Siliziumdioxyd ($SiO_2$) sind,
- wobei die Fraktion der Teilchen der Basismischung eine Größe kleiner als 40 $\mu$m aufweist und die sich in Gewichtsprozent im Verhältnis zum Gewicht der Basismischung in folgender Weise verteilt ist:
- Fraktion <0,5 $\mu$m: $\geq$ 4%
- Fraktion <2 $\mu$m: $\geq$ 5%
- Fraktion <10 $\mu$m: $\geq$ 16%
- Fraktion <40 $\mu$m: 29-45%
wobei diese Feuerfestzusammensetzung in Gewichtsprozent im Verhältnis zum Gewicht der Basismischung weiterhin aufweist:
- 0,02 bis 0,08% organischer Fasern, und
- 0,075 bis 1% eines oberflächenaktiven Stoffes.

2. Zusammensetzung nach Anspruch 1, **dadurch gekennzeichnet, dass** die Fraktion der Teilchen dieser Basismischung eine Größe kleiner als 40 $\mu$m aufweist und in folgender Weise in Gewichtsprozenten im Verhältnis zum Gewicht der Basismischung verteilt ist:

   - Fraktion <0,5 $\mu$m: $\geq$ 4%
   - Fraktion <2 $\mu$m: $\geq$ 8%
   - Fraktion <10 $\mu$m: $\geq$ 16%
   - Fraktion <40 $\mu$m: 30 - 45%

3. Zusammensetzung nach einem der Ansprüche 1 oder 2, **dadurch gekennzeichnet, dass** sie in Gewichtsprozent im Verhältnis zum Gewicht der Basismischung 0,1 bis 1 % des oberflächenaktiven Stoffs aufweist.

4. Zusammensetzung nach einem der vorhergehenden Ansprüche, **dadurch gekennzeichnet, dass** die Basismischung in Gewichtsprozent enthält:

   - $Al_2O_3$: 45 - 65%
   - $ZrO_2$ : 20 - 35%
   - $SiO_2$: 12 - 20%

5. Zusammensetzung nach einem der vorhergehenden Ansprüche, **dadurch gekennzeichnet, dass** sie zusätzlich 4 bis 5,5% Wasser im Verhältnis zum Gesamtgewicht der Basismischung enthält.

6. Zusammensetzung nach einem der vorhergehenden Ansprüche, **dadurch gekennzeichnet, dass** die Fraktion der Teilchen der Basismischung eine Größe kleiner als 500 $\mu$m aufweist und mehr als 50% des Gewichts der Basismischung repräsentiert.

7. Zusammensetzung nach einem der vorhergehenden Ansprüche, **dadurch gekennzeichnet, dass** die Fraktion der Teilchen der Basismischung eine Größe aufweist, die zwischen 40 und 500 $\mu$m liegt und zwischen 15 und 30% am Gewicht der Basismischung.

8. Zusammensetzung nach einem der vorhergehenden Ansprüche, **dadurch gekennzeichnet, dass** die Teilchen des feuerfesten Materials 3 bis 5% Silikat-Staub enthalten.

9. Zusammensetzung nach einem der vorhergehenden Ansprüche, **dadurch gekennzeichnet, dass** die Fraktion der Teilchen der Basismischung eine Größe kleiner als 40 $\mu$m aufweist und in Gewichtsprozenten im Verhältnis zum Gewicht der Basismischung folgendermaßen verteilt ist:

   - Fraktion <0,5 $\mu$m: $\geq$ 5%
   - Fraktion <2 $\mu$m: $\geq$ 10%
   - Fraktion <10 $\mu$m: $\geq$ 22%
   - Fraktion <40 $\mu$m: 30 - 45%

10. Zusammensetzung nach einem der vorhergehenden Ansprüche, **dadurch gekennzeichnet, dass** der Anteil des Siliziumdioxyds in der Fraktion der Teilchen der Basismischung eine Größe kleiner als 500$\mu$m aufweist und kleiner oder gleich 16% ist und zwar in Gewichtsprozent im Verhältnis zum Gesamtgewicht der Fraktion.

**11.** Zusammensetzung nach Anspruch 10, **dadurch gekennzeichnet, dass** der Anteil des Siliciumdioxyds in der Fraktion der Teilchen der Basismischung eine Größe kleiner als $500\mu m$ aufweist und kleiner oder gleich 14,5% ist und zwar in Gewichtsprozent im Verhältnis zum Totalgewicht der Fraktion.

**12.** Zusammensetzung nach einem der vorhergehenden Ansprüche, **dadurch gekennzeichnet, dass** der Anteil des Siliciumdioxyds in der Fraktion der Teilchen der Basismischung eine Größe kleiner als $40\mu m$ aufweist und kleiner oder gleich 14,5% ist, und zwar in Gewichtsprozent im Verhältnis zum Gesamtgewicht der Fraktion.

**13.** Zusammensetzung nach einem der vorhergehenden Ansprüche, **dadurch gekennzeichnet, dass** die Basismischung in Gewichtsprozent 3 bis 5% hydraulischen Zement aufweist.

**14.** Zusammensetzung nach einem der vorhergehenden Ansprüche, **dadurch gekennzeichnet, dass** sie in Gewichtsprozent im Verhältnis zum Gewicht der Basismischung zwischen 0,01 und 0,15% eines Abbinde-Beschleunigers aufweist.

**15.** Zusammensetzung nach einem der vorhergehenden Ansprüche, **dadurch gekennzeichnet, dass** der oberflächenaktive Stoff eine Zusammensetzung aus der Familie von modifizierten Polycarboxylaten ist.

**16.** Feuerfestprodukt erhalten aus der Sinterung einer feuerfesten Zusammensetzung nach einem der vorhergehenden Ansprüche 1 bis 15.

**17.** Feuerfestprodukt nach Anspruch 16, **dadurch gekennzeichnet, dass** $((L_{max}-L_{1350})/L)\leq0,5\%$, wobei L, $L_{max}$ und $L_{1350}$ jeweils die Länge einer Probe des Produkts bei Zimmertemperatur, bei maximaler Dilatation und bei 1350°C bezeichnen.

**18.** Feuerfestprodukt nach einem der Ansprüche 16 und 17, **dadurch gekennzeichnet, dass** es eine maximale Dilatationstempertur ($Td_{max}$) größer als 1100°C gibt.

**Claims**

**1.** Unshaped refractory composition, in particular for producing glass furnace hearths, **characterized in that** it comprises a basic mixture comprising:

- 1 to 6% by weight of a hydraulic cement, and
- 94 to 99% by weight of particles of at least one refractory material whose main constituents are alumina ($Al_2O_3$), zirconia ($ZrO_2$) and silica ($SiO_2$), the fraction of the particles of said basic mixture having a size less than 40 $\mu m$ being distributed in the following manner relative to the weight of said basic mixture:

- fraction<0.5 $\mu m$: $\geq$4% by weight
- fraction<2 $\mu m$: $\geq$5% by weight
- fraction<10 $\mu m$: $\geq$16% by weight
- fraction<40 $\mu m$: 29-45% by weight
said refractory composition further comprising, relative to the weight of said basic mixture,
- 0.02 to 0.08% by weight of organic fibers, and
- 0.075 to 1 % by weight of a surface active agent.

**2.** Composition according to claim 1, **characterized in that** the fraction of the particles of said basic mixture having a size less than 40 $\mu m$ is distributed in the following manner relative to the weight of said basic mixture:

- fraction<0.5 $\mu m$: $\geq$4% by weight,
- fraction<2 $\mu m$: $\geq$8% by weight,
- fraction<10 $\mu m$: $\geq$16% by weight,
- fraction<40 $\mu m$: 30-45% by weight.

**3.** Composition according to either claim 1 or claim 2, **characterized in that** it comprises 0.1 to 1% by weight of said surface-active agent relative to the weight of said basic mixture.

4. Composition according to any one of the preceding claims, **characterized in that** said basic mixture contains:

- $Al_2O_3$: 45-65% by weight,
- $ZrO_2$: 20-35% by weight,
- $SiO_2$: 12-20% by weight.

5. Composition according to any one of the preceding claims, **characterized in that** it further comprises 4 to 5.5% of water relative to the total weight of said basic mixture.

6. Composition according to any one of the preceding claims, **characterized in that** the fraction of the particles of said basic mixture having a size less than 500 $\mu$m represents more than 50% by weight of said basic mixture.

7. Composition according to any one of the preceding claims, **characterized in that** the fraction of the particles of said basic mixture having a size from 40 to 500 $\mu$m is from 15 to 30% by weight of said basic mixture.

8. Composition according to any one of the preceding claims, **characterized in that** said refractory material particles contain 3 to 5% of fumed silica.

9. Composition according to any one of the preceding claims, **characterized in that** the fraction of the particles of said mixture having a size of less than 40 $\mu$m is distributed in the following manner relative to the weight of said basic mixture:

- fraction<0.5 $\mu$m: $\geq$5% by weight,
- fraction<2 $\mu$m: $\geq$10% by weight,
- fraction<10 $\mu$m: $\geq$22% by weight,
- fraction<40 $\mu$m: 30-45% by weight.

10. Composition according to any one of the preceding claims, **characterized in that** the proportion of silica in the fraction of said particles of said basic mixture having a size less than 500 $\mu$m is less than or equal to 16% by weight relative to the total weight of said fraction.

11. Composition according to claim 10, **characterized in that** the proportion of silica in the fraction of said particles of said basic mixture having a size less than 500 $\mu$m is less than or equal to 14.5% by weight relative to the total weight of said fraction.

12. Composition according to any one of the preceding claims, **characterized in that** the proportion of silica in the fraction of said particles of said basic mixture having a size less than 40 $\mu$m is less than or equal to 14.5% by weight of the total weight of said fraction.

13. Composition according to any one of the preceding claims, **characterized in that** said basic mixture comprises 3 to 5% by weight of said hydraulic cement.

14. Composition according to any one of the preceding claims, **characterized in that** it comprises from 0.01 to 0.15 % by weight of a hardening accelerator relative to the weight of said basic mixture.

15. Composition according to any one of the preceding claims, **characterized in that** said surface-active agent is a compound from the family of modified polycarboxylates.

16. Refractory product obtained by sintering a refractory composition according to any one of claims 1 to 15.

17. Refractory product according to claim 16, **characterized in that** $((L_{max}-L_{1350})/L)\leq0.5\%$, where L, $L_{max}$ and $L_{1350}$ designate the length of a sample of said product at ambient temperature, at a maximum expansion temperature, and at a temperature of 1350°C, respectively.

18. Refractory product according to either claim 16 or claim 17, **characterized in that** it has a maximum expansion temperature ($Td_{max}$) greater than 1100 °C.

**EP 1 456 150 B1**

**RÉFÉRENCES CITÉES DANS LA DESCRIPTION**

**Documents brevets cités dans la description**

- FR 2458520 B